# FASCICULE DE BREVET EUROPEEN

(11) **EP 1 850 675 B1**
(45) Date de publication et mention de la délivrance du brevet: **26.08.2009**
(21) Numéro de dépôt: 06709316.1
(22) Date de dépôt: 14.02.2006
(51) Int. Cl.: A23B 7/04

(54) **PROCEDE ET INSTALLATION DE FABRICATION DE GALETS DE PUREE ALIMENTAIRE SURGELLE, ET PREPARATION ALIMENTAIRE ASSOCIEE**
VERFAHREN UND ANLAGE ZUR HERSTELLUNG VON BLÖCKEN VON GEFRORENEM NAHRUNGSMITTELPÜREE SOWIE ENTSPRECHENDES NAHRUNGSMITTELPRODUKT
METHOD AND PLANT FOR PRODUCTION OF BLOCKS OF FROZEN FOOD PUREE AND CORRESPONDING FOOD PRODUCT

(30) Priorité: 16.02.2005 FR 0501597
(43) Date de publication de la demande: 07.11.2007
(73) Titulaire: Kerry Ingredients France, 84400 Apt (FR)
(72) Inventeur: VASSEUR, Philippe, F-69280 Marcy L'Etoile (FR); MICHALLET, Jean-François, F-07100 Annonay (FR); STARON, Henri, F-84400 Apt (FR)
(74) Mandataire: Blot, Philippe Robert Emile
(86) Numéro de dépôt international: PCT/FR2006/000336
(87) Numéro de publication internationale: WO 2006/087461

(56) Documents cités:
- FR-A- 2 786 368
- US-A- 4 517 211
- US-A- 4 906 486
- DATABASE WPI Section Ch, Week 1984 Derwent Publications Ltd., London, GB; Class A23, AN 1984-274426 XP002339137 -& SU 995 727 A (N-PROIZV OB PO PROIZV PRODUKTOV IZ KARTOFELYA) 18 février 1983 (1983-02-18)

## Description

La présente invention concerne un procédé de fabrication de galets de purée alimentaire surgelée, du type comprenant les étapes suivantes :
(a) on applique la purée alimentaire sur une surface refroidie d'un convoyeur;
(b) on surgèle la purée sur ladite surface ;
(c) on découpe la purée surgelée ; et
(d) on forme les galets de purée surgelée.

Ce procédé s'applique notamment à la fabrication de préparations alimentaires portionnables comprenant des galets de purée alimentaire surgelée de faible masse.

De telles préparations alimentaires sont utilisées notamment en pâtisserie, ou pour préparer des boissons fraîches à partir de purées de fruits ou de légumes.

On connaît de FR -A- 2 786 368 un procédé du type précité, dans lequel on étale une couche mince de purée sur un cylindre refroidi par un dispositif à froid mécanique, et on surgèle cette couche mince sur le cylindre. Puis, on râcle la couche mince surgelée à l'aide d'un couteau, de façon à obtenir des copeaux de purée surgelée. Pour former les galets, on agglomère les copeaux de purée et on moule les galets à l'aide d'une presse formée entre deux empreintes ménagées dans des cylindres disposés en regard l'un de l'autre.

Dans un tel procédé, le contrôle des paramètres de fabrication, notamment la température, l'humidité, et la pression appliquée sur les copeaux de purée surgelée lors de leur moulage, est difficile à réaliser. Les propriétés organoleptiques des galets obtenus peuvent donc facilement se dégrader. Il est de plus difficile de modifier les dimensions et/ou la forme des galets.

Un but de l'invention est d'obtenir un procédé de fabrication de galets de purée alimentaire surgelée, simple à mettre en oeuvre, qui préserve les qualités organoleptiques des galets obtenus et permette d'obtenir facilement des galets de divers types.

A cet effet, l'invention a pour objet un procédé du type précité, caractérisé en ce que, lors de l'étape (a), on dépose la purée sur ladite surface sous forme d'au moins un boudin continu et en ce que, lors de l'étape (d), les galets sont formés par la découpe du ou de chaque boudin surgelé.

Le procédé selon l'invention peut comprendre une ou plusieurs des caractéristiques suivantes, prise(s) isolément ou suivant toutes combinaisons techniquement possibles :
- lors de l'étape (a), on dépose la purée sur ladite surface sous forme d'une pluralités de boudins continus sensiblement parallèles entre eux ;
- lors de l'étape (a), on forme le ou chaque boudin par passage à travers une filière, la dimension transversale maximale du ou de chaque boudin en aval de la filière étant réglée par la pression appliquée sur la purée en amont de la filière ;
- on règle la dimension longitudinale maximale des galets lors de la découpe du ou de chaque boudin ;
- avant l'étape (a), on traite thermiquement la purée alimentaire par refroidissement ou par chauffage ;
- lors de l'étape (a), la viscosité de la purée est comprise entre 1000 mPa.s et 15000 mPa.s ; et
- lors de l'étape (b), on fait circuler le ou chaque boudin déposé sur la surface convoyeuse à travers un tunnel de surgélation à l'azote.

L'invention a en outre pour objet une préparation alimentaire comprenant une pluralité de galets de purée alimentaire surgelée, caractérisée en ce que chaque galet présente deux faces transversales de découpe sensiblement planes et une section transversale sensiblement constante entre lesdites faces.

La préparation alimentaire peut comprendre une ou plusieurs des caractéristiques suivantes, prise(s) isolément ou suivant toutes combinaisons techniquement possibles :
- la masse de chaque galet est comprise entre 0,2 g et 10 g, de préférence entre 0,2 g et 5 g ;
- la dimension transversale maximale des galets est comprise entre 3 mm et 10 mm;
- chaque galet présente, entre lesdites faces transversales, une face inférieure sensiblement plane et une face opposée non plane ; et
- la section transversale de la face non plane est sensiblement en arc de cercle ou en arc d'ellipse.

L'invention a également pour objet une installation de fabrication de galets de purée alimentaire surgelée du type comprenant :
- un convoyeur présentant une surface de surgélation et des moyens de refroidissement de la surface de surgélation ;
- des moyens d'application de la purée alimentaire sur ladite surface ;
- des moyens de découpe de la purée alimentaire surgelée ; et
- des moyens de conformation de galets de purée surgelée,
   caractérisée en ce que les moyens d'application comprennent au moins une buse de dépôt de purée sur la surface pour y former au moins un boudin continu et en ce que les moyens de conformation des galets sont formés par les moyens de découpe du ou de chaque boudin surgelé.

L'installation selon l'invention peut comprendre une ou plusieurs des caractéristiques suivantes, prise(s) isolément ou suivant toutes combinaisons techniquement possibles :
- les moyens d'application comprennent une pluralité de buses de dépôt de purée sur la surface pour y former une pluralité de boudins continus sensiblement parallèles entre eux ;
- la ou chaque buse comprend une filière de conformation d'un boudin et des moyens d'application d'une pression réglable sur la purée en amont de la filière ;
- elle comprend des moyens de traitement thermique de la purée alimentaire par refroidissement ou chauffage, disposés en amont des moyens d'application ;
- les moyens de refroidissement comprennent un tunnel de surgélation à l'azote dans lequel circule la surface convoyeuse ; et
- les moyens de découpe comprennent un couteau rotatif à vitesse de rotation réglable disposé à la sortie du tunnel.

L'invention sera mieux comprise à la lecture de la description qui va suivre, donnée uniquement à titre d'exemple, et faite en se référant aux dessins annexés, sur lesquels :
- la Figure 1 est un diagramme schématique d'une installation de fabrication de galets de purée alimentaire surgelée selon l'invention ;
- la Figure 2 est une vue schématique en coupe suivant un plan vertical des moyens de surgélation et de découpe de l'installation de la Figure 1 ;
- la Figure 3 est une vue schématique en perspective des moyens d'application de la purée alimentaire dans l'installation de la Figure 1 ;
- la Figure 4 est une vue schématique partielle, en coupe suivant un plan vertical, d'une buse d'éjection des moyens d'application représentés à la Figure 3 ;
- la Figure 5 est une vue partielle en perspective de trois-quarts face des moyens de découpe de l'installation de la Figure 1 ; et
- la Figure 6 représente en perspective un galet suivant l'invention.

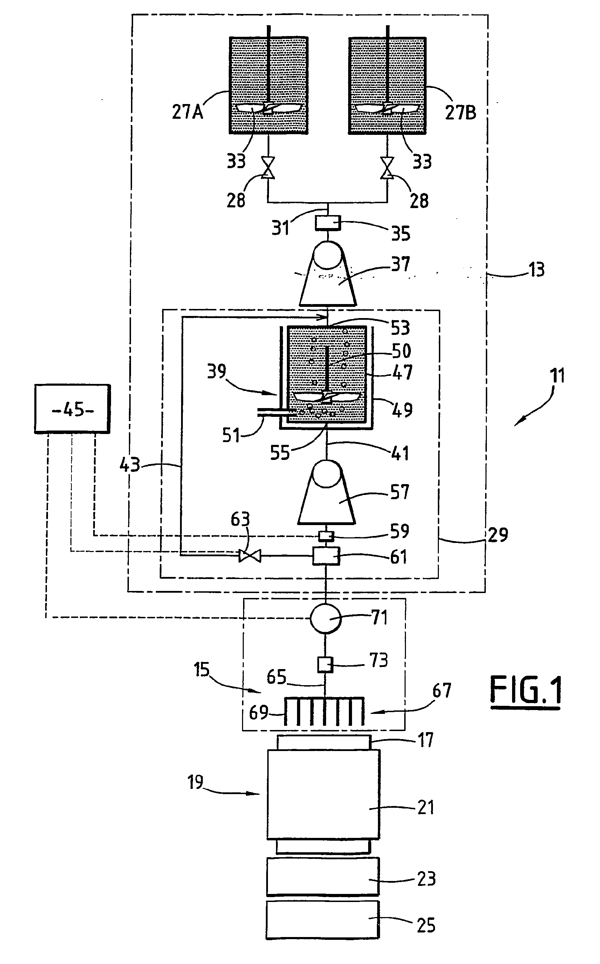

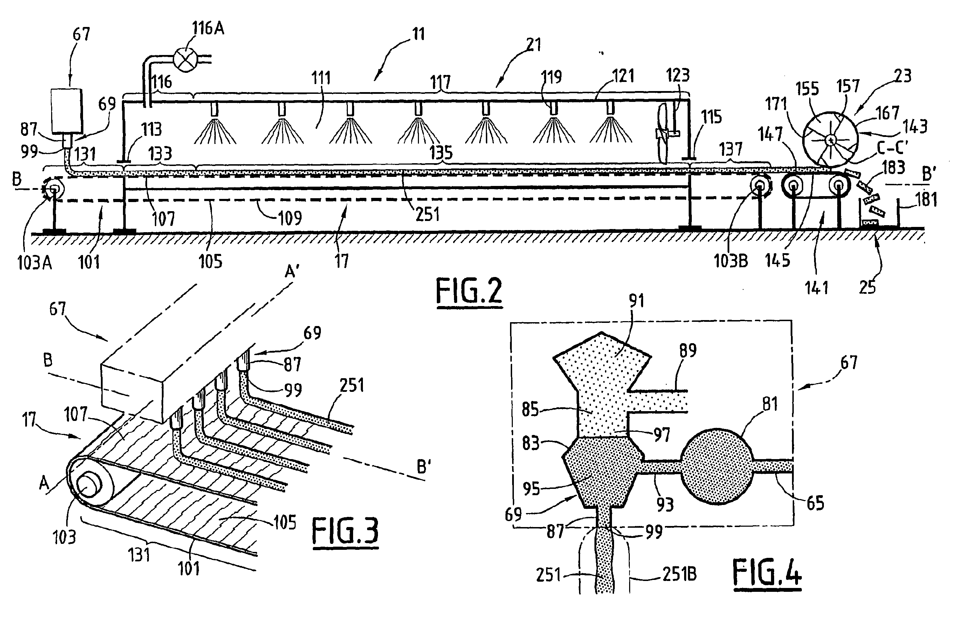

L'installation 11 représentée sur les Figures 1 et 2 est destinée à la mise en oeuvre d'un procédé de fabrication de galets de purée alimentaire surgelée selon l'invention.

Ces galets sont utilisés par exemple pour former des préparations alimentaires utilisables en pâtisserie, ou pour élaborer des boissons fraîches à parti de purées de fruits et/lou de légumes.

Les galets surgelés sont préparés à partir d'une purée de départ contenant des fruits et/ou des légumes, avec ou sans morceaux. La purée de départ peut être totalement liquide ou visqueuse.

Comme illustré par la Figure 1, l'installation 11 comprend des moyens 13 de préparation de la purée de départ, des moyens 15 d'application de la purée sous forme de boudins sur un convoyeur à bande 17, et des moyens 19 de surgélation des boudins de purée comprenant un tunnel de surgélation 21 dans lequel circule le convoyeur 17.

L'installation 11 comprend en outre des moyens 23 de découpe des boudins surgelés pour former les galets, et des moyens 25 de récupération et de conditionnement des galets.

Les moyens 13 de préparation comprennent deux cuves de stockage 27A et 27B disposées en parallèle, et raccordées en aval par une conduite d'entrée 31 à des moyens 29 de traitement thermique de la purée.

Chaque cuve de stockage 27A, 27B comprend des moyens 33 d'agitation de la purée surgelée.

La conduite d'entrée 31 comprend, d'amont en aval, un débitmètre 35 et une première pompe Moineau 37. La conduite 31 est raccordée à chaque cuve de stockage 27 en amont du débitmètre 35. Une vanne 28 est interposée entre chaque cuve 27 et le débitmètre 35.

Les moyens de traitement thermique 29 comprennent un mélangeur dynamique 39, une conduite de sortie 41, une conduite de recirculation 43 et un régulateur 45 de température et de pression.

Le mélangeur 39 comprend un récipient 47 muni d'une double enveloppe 49 dans laquelle circule un liquide de refroidissement. Le récipient 47 comporte par ailleurs une pointe 51 d'injection de gaz froid, par exemple d'azote froid, et un agitateur rotatif 50.

Une entrée amont 53 du récipient 47 est raccordée à la sortie de la conduite d'entrée 31.

La conduite de sortie 41 est raccordée à une sortie aval 55 du récipient 47. Elle comprend, d'amont en aval, une deuxième pompe Moineau 57, et des capteurs 59 de mesure de la température et de la pression raccordés électriquement au régulateur 45. La conduite 41 débouche en aval dans les moyens d'application 15.

La conduite de recirculation 43 est piquée sur la conduite de sortie 31, en un point 61 situé en aval des capteurs de température et de pression 59. Elle raccorde ce point 61 à l'entrée 53 du mélangeur 39. Elle est pourvue d'une vanne 63 de recirculation reliée électriquement au régulateur 45.

Les moyens d'application 15 de la purée surgelée comprennent une conduite 65 d'amenée de purée traitée, et une rampe 67 de dépôt de purée munie d'une pluralité de buses d'éjection 69 parallèles destinées à conformer une pluralité de boudins de purée.

La conduite d'amenée 65 raccorde la conduite de sortie 41 à la rampe de dépôt 67. Elle est munie, d'amont en aval, d'une vanne de commande 71 raccordée au régulateur 45 pour régler le débit de purée circulant dans la conduite d'amenée 65, et d'un capteur 73 de mesure de la température.

Comme illustré par la Figure 3, les buses d'éjection 69 de la rampe 67 sont disposées le long d'un axe A-A' transversal par rapport à l'axe longitudinal B-B' de convoyage du convoyeur 17.

En variante (non représentée), les moyens d'application 15 peuvent comprendre en outre une rampe de dépôt secondaire présentant des buses d'éjection décalées transversalement par rapport aux buses d'éjection 69 de la rampe principale.

Comme illustré par les Figures 3 et 4, chaque buse d'éjection 69 est raccordée à une nourrice commune 81 dans laquelle débouche la conduite d'amenée 65.

Chaque buse d'éjection 69 comprend une enveloppe creuse 83 délimitant une chambre de mise en pression 85, un conduit d'éjection 87 sensiblement vertical débouchant dans le fond de la chambre 85, et un conduit 89 d'amenée d'air comprimé débouchant transversalement dans une partie supérieure 91 de la chambre 85.

Chaque chambre 85 est raccordée à la nourrice 81 par une conduite de liaison 93 qui débouche dans une partie inférieure 95 de la chambre 85.

La partie inférieure 95 de la chambre 85 est de forme sensiblement tronconique convergente vers le bas. Elle débouche vers le haut dans une partie médiane 97 de la chambre de forme tronconique convergente vers le haut

La partie médiane 97 débouche dans la partie supérieure 91, en aval du conduit d'amenée d'air comprimé 89.

Le conduit 89 est raccordé en amont à une source d'air comprimé de pression réglable.

Comme illustré par la Figure 2, le conduit d'éjection 87 débouche, en aval, en un point 99 situé en regard du convoyeur 17, au-dessus et à l'écart de ce convoyeur 17. Le conduit d'éjection 87 forme ainsi une filière calibrée d'application de purée.

Le convoyeur 17 comprend une bande convoyeuse 101 enroulée autour de deux rouleaux 103A et 103B disposés de part et d'autre du tunnel 21. La bande convoyeuse 101 est formée à partir de lattes métalliques jointives 105 assemblées entres elles par leurs bords transversaux.

Les rouleaux 103A et 103B s'étendent horizontalement de manière sensiblement perpendiculaire à l'axe longitudinal B-B'. La bande 101 est tendue entre les rouleaux 31. Elle définit une surface supérieure 107 de surgélation sensiblement horizontale et une surface inférieure 109.

Les conduits d'éjection 87 des buses d'éjection 69 s'étendent sensiblement perpendiculairement à la surface supérieure 107.

Le tunnel de surgélation 21 s'étend le long de l'axe B-B'. Il délimite intérieurement une chambre 111 de surgélation s'étendant entre une entrée amont 113 et une sortie aval 115.

La chambre de surgélation 111 comprend une partie amont 116 munie d'un extracteur 116A. La partie amont 116 s'étend entre l'entrée amont 113 et une partie aval 117 munie d'une pluralité de buses 119 d'aspersion d'azote liquide.

Les buses 119 sont réparties le long de l'axe longitudinal B-B'. Chaque buse 119 fait saillie vers le bas à partir d'une paroi supérieure 121 du tunnel 21.

La partie aval 117 comprend un ventilateur 123, monté dans la chambre 111 au voisinage de la sortie 115 et destiné à faire circuler du gaz de l'aval vers l'amont pour homogénéiser la température dans le tunnel 21.

Le tunnel 21 définit sur la surface supérieure 107 de la bande une région amont 131 d'application des boudins de purée, qui fait saillie longitudinalement en amont du tunnel 21, une région 133 de surgélation par convection située dans la partie amont 116 du tunnel 21, une région 135 de surgélation par aspersion située dans la partie aval 117 du tunnel, et une région aval 137 de sortie du tunnel qui fait saillie longitudinalement en aval du tunnel 21.

Les moyens de découpe 23 comprennent un convoyeur de découpe 141, disposé dans le prolongement horizontal de la région de sortie 137, et un couteau rotatif 143 disposé au-dessus du convoyeur 141, en aval de celui-ci.

Le convoyeur de découpe 141 comprend une bande convoyeuse 145 de découpe dont la surface supérieure 147 affleure la surface supérieure 107 de la bande 137.

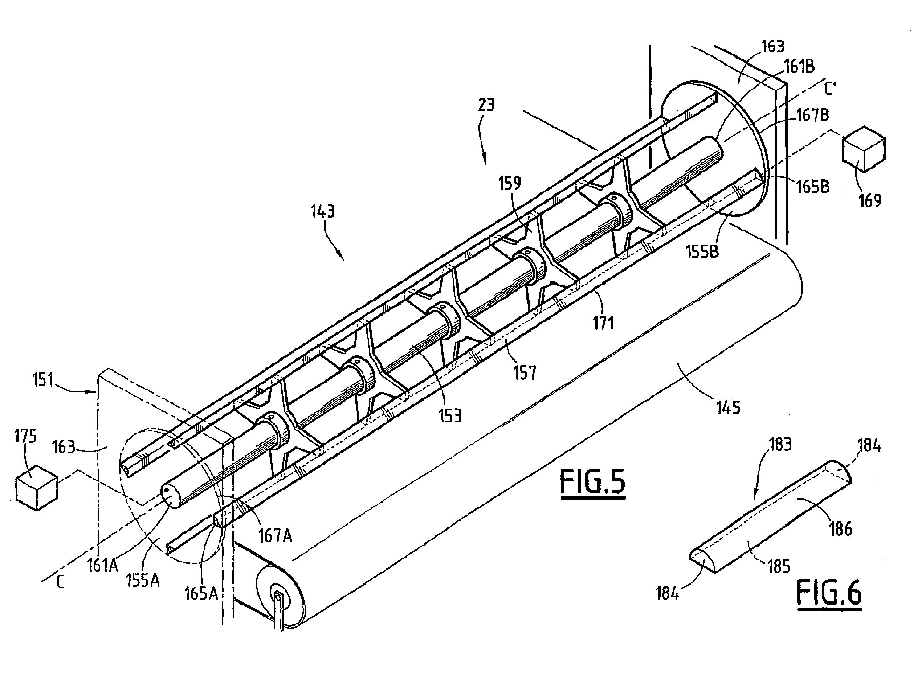

Comme illustré par la Figure 5, le couteau 143 est monté rotatif sur un bâti 151 autour d'un axe C-C' transversal.

Le couteau rotatif 143 comprend un arbre de rotation 153 sensiblement transversal, deux disques 155A et 155B de support de lames transversales rotatives 157, et des bras 159 de renfort de ces lames 157. Dans l'exemple représenté, le couteau comprend quatre lames 157.

Les extrémités 161A et 161B de l'arbre 153 sont montées dans deux piliers 163 verticaux du bâti 151.

Les disques de support 155A et 155B s'étendent perpendiculairement à l'axe C-C' de l'arbre 153, sensiblement au voisinage des extrémités 161 de cet arbre 153.

Chaque lame rotative 157 présente une extrémité gauche 165A fixée sur la périphérie 167A du disque gauche 155A et une extrémité droite 165B fixée sur la périphérie 167B du disque droit 155B. Des moyens motorisés 169 de réglage de l'inclinaison de la lame permettent d'ajuster l'angle formé par le tranchant 171 des lames 157 avec la tangente au disque 155 au niveau du point de fixation des lames 157 sur le disque 155.

Les bras de renfort 159 s'étendent radialement par rapport à l'axe C-C', entre l'arbre 153 et une face arrière de chaque lame 157. Ils sont répartis sensiblement uniformément le long de l'arbre 153.

Comme illustré par la Figure 2, en projection dans un plan vertical, la périphérie 167 des disques, et par suite, le tranchant 171 des lames 157, affleure la surface supérieure 147 du convoyeur 145, de sorte que les lames 157 peuvent entrer en contact avec un objet disposé sur la surface supérieure 147.

En référence à la Figure 5, les moyens de découpe 23 sont par ailleurs munis de moyens 175 d'entraînement en rotation du couteau rotatif 143 à vitesse de rotation réglable.

Comme illustré par la Figure 2, les moyens de récupération 25 comprennent des moyens 181 de réception des galets 183 découpés, disposés sous le convoyeur 141 en aval du couteau rotatif 143. Ces moyens 181 comprennent un système de convoyage qui amène les galets jusqu'à une unité de conditionnement (non représentée). L'unité de conditionnement comporte des moyens de pesée et des moyens d'emballage pour réaliser des préparations alimentaires de masse déterminée.

Un procédé de fabrication d'une préparation alimentaire comprenant, une pluralité de galets de purée alimentaire surgelée, mis en oeuvre dans l'installation 11, va maintenant être décrit.

Ce procédé comprend une étape de traitement de la purée alimentaire de départ, une étape d'application de boudins de purée alimentaire traitée sur la surface supérieure 107 du convoyeur 17, une étape de surgélation des boudins de purée, une étape de formation des galets de purée surgelée, et une étape de conditionnement des galets pour former le produit alimentaire surgelé.

Dans l'étape de traitement, la purée alimentaire contenue dans l'une des cuves de stockage 27A et 27B est convoyée à travers la conduite d'entrée 31 1 jusqu'au mélangeur 39 par la première pompe Moineau 37.

Dans le cas où la purée alimentaire n'est pas foisonnante, de l'azote refroidi est injecté directement dans la purée alimentaire par la pointe 51 à l'intérieur du mélangeur 47, afin de régler la température de la purée mesurée par le capteur 59 à une valeur déterminée comprise par exemple entre - 2°C et 10°C.

En variante, si la purée est foisonnante, la température de la purée est réglée par échange thermique avec le fluide réfrigérant circulant dans la double enveloppe 49.

Si la valeur de température mesurée par le capteur 59 diffère de la valeur déterminée, la vanne de commande 71 est obturée et la vanne de recirculation 63 est ouverte par le régulateur 45 jusqu'à ce que la température mesurée par le capteur 59 soit sensiblement égale à la valeur déterminée.

La température de la purée est régulée dans les moyens de traitement thermique 43, pour que sa viscosité lorsqu'elle circule dans les moyens d'application 15 soit comprise entre 1000 mPa.s et 15000 mPa.s.

A l'étape d'application, lorsque la température mesurée par le capteur 59 est sensiblement égale à la valeur déterminée, le régulateur 45 obture la vanne de recirculation 63 et active la vanne de commande 71. La purée est alors introduite dans la nourrice 81 puis répartie dans les buses d'éjection 69.

Une partie de la purée pénètre ainsi dans chaque chambre 85. Sous l'action de la pression d'air comprimé appliquée sur la surface supérieure de la purée dans la chambre 85, la purée est éjectée vers le bas à travers la conduite d'éjection 87, de sorte qu'elle forme, à la sortie de cette conduite 87, un boudin 251 continu de section transversale sensiblement constante. La dimension transversale maximale du boudin 251 est réglée en ajustant la valeur de pression de gaz appliquée dans la partie supérieure 91 de la chambre 85. Grâce à la viscosité contrôlée de la purée dans la conduite d'éjection 87, la dimension transversale maximale du boudin 251 B augmente avec la pression, comme illustré par la Figure 4. Par ailleurs, la section transversale du boudin 251 est sensiblement continue le long du boudin 251.

Le procédé selon l'invention permet donc de régler facilement la dimension transversale maximale des boudins 251.

Une pluralité de boudins 251 parallèles et continus sont ainsi déposés sur la surface supérieure 107 du convoyeur 17, en regard de la région d'application 131, et sont convoyés en aval sur cette surface 107 vers le tunnel 21.

La surgélation des boudins 251 commence dès leur application sur la surface 107 refroidie dans la région d'application 131.

Lorsque les boudins 251 pénètrent dans le tunnel 21, de l'azote froid produit par évaporation de l'azote liquide dispersé par les buses 119 circule en sens inverse de la bande 101 sous l'effet du ventilateur 123. La surgélation des boudins 251 se poursuit donc dans la région 133 par absorption des frigories de l'azote froid circulant à contre-courant des boudins 251.

Puis, dans la région de surgélation par aspersion 135, l'azote liquide injecté par les buses 119 est pulvérisé sur les boudins 251 qui absorbent les frigories de vaporisation.

La formation des boudins 251 et leur dépôt sur la bande 101 permettent leur surgélation rapide de manière très efficace. Ainsi, la vitesse de refroidissement obtenue par contact avec la bande 101 et par aspersion d'azote liquide évite le dessèchement et la perte de poids des boudins 251 et limite les phénomènes biochimiques tels que l'oxydation ou les réactions enzymatiques qui pourraient détériorer les propriétés organoleptiques.

Par ailleurs, la présence d'une atmosphère d'azote dans le tunnel permet de protéger les boudins 251 contre ces phénomènes.

Les boudins 251 ainsi formés présentent, à la sortie 115 du tunnel 21, des dimensions transversales comprises entre 5 mm et 10 mm et une hauteur comprise entre 3 mm et 10 mm.

Dans la région aval 137, les boudins forment des tiges rigides qui sont poussées sur le convoyeur de découpe 145.

A la sortie de ce convoyeur 145, les tiges sont découpées transversalement par les lames 157 du couteau 143.

La dimension longitudinale des galets 183 est réglée par le rapport de la vitesse de rotation du couteau rotatif 143 à la vitesse du convoyeur de découpe 145. Par suite, le procédé selon l'invention permet, par des moyens simples, de régler précisément et de manière continue la masse, la forme et les dimensions des galets de purée alimentaire surgelée obtenus et recueillis dans les wagons de réception 181.

Ainsi, la masse des galets 183 est facilement modifiée en ajustant les dimensions transversales des boudins 251 par le contrôle de la pression d'éjection, et en ajustant les dimensions longitudinales des boudins 251 par le contrôle du rapport de la vitesse de rotation du couteau rotatif 143 à la vitesse de circulation du convoyeur 145.

Le procédé ainsi décrit permet donc d'obtenir des galets 183 de masse comprise entre 0,2 à 10 grammes, et de préférence entre 0,2 g et 5 g pour réaliser des préparations alimentaires faciles à portionner.

Les galets 183 obtenus présentent une section transversale sensiblement constante sur toute leur longueur entre les deux faces sensiblement transversales 184 de découpe, avec une face plane 185 et une face opposée 195 non plane, dont la section est déterminée par la section de la buse 87. Dans l'exemple de la Figure 6, la section de la face 186 est sensiblement en arc de cercle ou d'ellipse.

Dans une variante du procédé selon l'invention, lorsque la purée de départ présente une viscosité élevée, par exemple supérieure à 50000 mPa.s, la purée injectée dans le mélangeur 39 est réchauffée pour que sa viscosité lorsqu'elle circule dans les conduits d'éjection 87 soit comprise entre 1000 mPa.s et 15000 mPa.s. Le procédé ainsi modifié permet d'obtenir par exemple des galets de purée de marrons surgelée.

Dans une autre variante, l'installation est dépourvue de moyens de traitement thermique, et le procédé ne comprend pas d'étape de traitement thermique.

## Revendications

1. Procédé de fabrication de galets formés (183) de purée alimentaire surgelée, du type comprenant les étapes suivantes :
(a) on applique la purée alimentaire sur une surface (107) refroidie d'un convoyeur (17) ;
(b) on surgèle la purée sur ladite surface (107) ;
(c) on découpe la purée surgelée ; et
(d) on forme les galets (183) de purée surgelée ;
**caractérisé en ce que**, lors de l'étape (a), on déposé la purée sur ladite surface (107) sous forme d'au moins un boudin (251) continu au moyen d'une filière calibrée (87) les boudins surgelés à l'étape (b) formant des tiges rigides, et **en ce que**, lors de l'étape (d), les galets (183) sont formés avec une section transversale sensiblement constante par la découpe du ou de chaque boudin surgelé (251), en découpant transversalement les tiges rigides.

2. Procédé selon la revendication 1, **caractérisé en ce que** lors de l'étape (a), on dépose la purée sur ladite surface (107) sous forme d'une pluralités de boudins (251) continus sensiblement parallèles entre eux.

3. Procédé selon l'une des revendications 1 ou 2, **caractérisé en ce que**, lors de l'étape (a), on forme le ou chaque boudin (251) par passage à travers une filière (87) située à l'écart de la surface, la dimension transversale maximale du ou de chaque boudin en aval de la filière (87) étant réglée par la pression appliquée sur la purée en amont de la filière (87).

4. Procédé selon l'une quelconque des revendications précédentes, **caractérisé en ce qu'**on règle la dimension longitudinale maximale des galets (183) lors de la découpe du ou de chaque boudin (251).

5. Procédé selon l'une quelconque des revendications précédentes, **caractérisée en ce que**, avant l'étape (a), on traite thermiquement la purée alimentaire par refroidissement ou par chauffage.

6. Procédé selon l'une quelconque des revendications précédentes, **caractérisé en ce que**, lors de l'étape, (a), la viscosité de la purée est comprise entre 1000 mPa.s et 15000 mPa.s.

7. Procédé selon l'une quelconque des revendications précédentes, **caractérisé en ce que**, lors de l'étape (b), on fait circuler le ou chaque boudin (251) déposé sur la surface convoyeuse (107) à travers un tunnel (21) de surgélation à l'azote.

8. Préparation alimentaire comprenant une pluralité de galets (183) de purée alimentaire surgelée, **caractérisée en ce que** chaque galet (183) présente deux faces transversales (184) de découpe sensiblement planes et une section transversale sensiblement constante sur toute sa longueur entre lesdites faces (184).

9. Préparation alimentaire selon la revendication 8, **caractérisée en ce que** la masse de chaque galet (183) est comprise entre 0,2 g et 10 g, de préférence entre 0,2 g et 5 g.

10. Préparation alimentaire selon l'une des revendications 8 ou 9, **caractérisée en ce que** la dimension transversale maximale des galets (251) est comprise entre 3 mm et 10 mm.

11. Préparation alimentaire selon l'une quelconque des revendications 8 à 10, **caractérisée en ce que** chaque galet présente, entre lesdites faces transversales (184), une face inférieure (185) sensiblement plane et une face opposée (186) non plane.

12. Préparation alimentaire selon la revendication 11, **caractérisée en ce que** la section transversale de la face non plane (186) est sensiblement en arc de cercle ou en arc d'ellipse.

13. Installation (11) de fabrication de galets (183) de purée alimentaire surgelée, du type comprenant :
- un convoyeur (17) présentant une surface (107) de surgélation et des moyens (119) de refroidissement de la surface de surgélation (107) ;
- des moyens (15) d'application de la purée alimentaire sur ladite surface (107) ;
- des moyens (23) de découpe de la purée alimentaire surgelée ; et
- des moyens de conformation de galets de purée surgelée,
**caractérisée en ce que** les moyens d'application (15) comprennent au moins une buse (69) de dépôt de purée sur la surface (107) délimitant une filière calibrée (87) pour y former au moins un boudin continu (251) avec une section transversale sensiblement constante et **en ce que** les moyens de conformation des galets sont formés par les moyens de découpe (23) du ou de chaque boudin surgelé (251).

14. Installation (11) selon la revendication 13, **caractérisée en ce que** les moyens d'application (15) comprennent une pluralité de buses (69) de dépôt de purée sur la surface (107) pour y former une pluralité de boudins continus (251) sensiblement parallèles entre eux.

15. installation (11) selon l'une des revendications 13 ou 14, **caractérisée en ce que** la ou chaque buse (69) comprend une filière (87) de conformation d'un boudin (251) et des moyens d'application d'une pression réglable sur la purée en amont de la filière (87).

16. Installation (11) selon l'une quelconque des revendications 13 à 15, **caractérisée en ce qu'**elle comprend des moyens (29) de traitement thermique de la purée alimentaire par refroidissement ou chauffage, disposés en amont des moyens d'application (15).

17. Installation (11) selon l'une quelconque des revendications 13 à 16, **caractérisée en ce que** les moyens de refroidissement comprennent un tunnel (21) de surgélation à l'azote dans lequel circule la surface convoyeuse (107).

18. installation (11) selon la revendication 17, **caractérisée en ce que** les moyens de découpe (23) comprennent un couteau rotatif (143) à vitesse de rotation réglable disposé à la sortie du tunnel (21).

## Claims

1. Method for producing formed tablets (183) of frozen food purée, of the type comprising the following steps:
(a) the food purée is applied to a cooled surface (107) of a conveyor (17);
(b) the purée is frozen on said surface (107);
(c) the frozen purée is cut; and
(d) the tablets (183) of frozen purée are formed;
**characterised in that**, in step (a), the purée is deposited on said surface (107) in the form of at least one continuous strip (251) by means of a calibrated die (87), the strips frozen in step (b) forming rigid rods, and **in that**, in step (d), the tablets (183) are formed with a substantially constant transverse cross-section by cutting the or each frozen strip (251), by cutting the rigid rods transversely.

2. Method according to claim 1, **characterised in that**, in step (a), the purée is deposited on said surface (107) in the form of a plurality of substantially parallel continuous strips (251).

3. Method according to either claim 1 or claim 2,
**characterised in that**, in step (a), the or each strip (251) is formed by passage through a die (87) situated away from the surface, the maximum transverse dimension of the or each strip downstream of the die (87) being adjusted by the pressure applied to the purée upstream of the die (87).

4. Method according to any one of the preceding claims,
**characterised in that** the maximum longitudinal dimension of the tablets (183) is adjusted when the or each strip (251) is cut.

5. Method according to any one of the preceding claims,
**characterised in that**, prior to step (a), the food purée is heat treated by cooling or by heating.

6. Method according to any one of the preceding claims,
**characterised in that**, in step (a), the viscosity of the purée is from 1000 mPa.s to 15,000 mPa.s.

7. Method according to any one of the preceding claims,
**characterised in that**, in step (b), the or each strip (251) deposited on the conveyor surface (107) is moved through a nitrogen freezing tunnel (21).

8. Food preparation comprising a plurality of tablets (183) of frozen food purée, **characterised in that** each tablet (183) has two substantially planar transverse cut faces (184) and, between said faces (184), a transverse cross-section that is substantially constant over its entire length.

9. Food preparation according to claim 8, **characterised in that** the mass of each tablet (183) is from 0.2 g to 10 g, preferably from 0.2 g to 5 g.

10. Food preparation according to either claim 8 or claim 9, **characterised in that** the maximum transverse dimension of the tablets (183) is from 3 mm to 10 mm.

11. Food preparation according to any one of claims 8 to 10, **characterised in that** each tablet has, between said transverse faces (184), a substantially planar bottom face (185) and an opposing non-planar face (186).

12. Food preparation according to claim 11, **characterised in that** the transverse cross-section of the non-planar face (186) substantially has the shape of an arc of a circle or an arc of an ellipse.

13. Installation (11) for producing tablets (183) of frozen food purée, of the type comprising:
- a conveyor (17) having a freezing surface (107) and means (119) for cooling the freezing surface (107);
- means (15) for applying the food purée to said surface (107) ;
- means (23) for cutting the frozen food purée; and
- means for forming tablets of frozen purée,
**characterised in that** the application means (15) comprise at least one nozzle (69) for depositing purée on the surface (107), which nozzle (69) delimits a calibrated die (87) for forming thereon at least one continuous strip (251) having a substantially constant cross-section, and **in that** the means for forming the tablets are formed by means (23) for cutting the or each frozen strip (251).

14. Installation (11) according to claim 13, **characterised in that** the application means (15) comprise a plurality of nozzles (69) for depositing purée on the surface (107) in order to form thereon a plurality of substantially parallel continuous strips (251).

15. Installation (11) according to either claim 13 or claim 14, **characterised in that** the or each nozzle (69) comprises a die (87) for forming a strip (251) and means for applying an adjustable pressure to the purée upstream of the die (87).

16. Installation (11) according to any one of claims 13 to 15, **characterised in that** it comprises means (29) for heat treating the food purée by cooling or heating, which means are arranged upstream of the application means (15).

17. Installation (11) according to any one of claims 13 to 16, **characterised in that** the cooling means comprise a nitrogen freezing tunnel (21) through which the conveyor surface (107) moves.

18. Installation (11) according to claim 17, **characterised in that** the cutting means (23) comprise a rotary knife (143) which has an adjustable speed of rotation and is arranged at the exit of the tunnel (21).

## Patentansprüche

1. Verfahren zur Herstellung von geformten Blöcken (183) von gefrorenem Nahrungsmittelpüree, das die folgenden Schritte beinhaltet:
(a) Aufbringen des Nahrungsmittelpürees auf eine gefrorene Oberfläche (107) eines Förderers (17);
(b) Gefrieren des Pürees auf die genannte Oberfläche (107);
(c) Schneiden des gefrorenen Pürees; und
(d) Bilden von Blöcken (183) aus dem gefrorenen Püree;
**dadurch gekennzeichnet, dass** in Schritt (a) das Püree
in Form von wenigstens einem kontinuierlichen Strang (251) durch ein kalibriertes Mundstück (87) auf die genannte Oberfläche (107) aufgebracht wird, wobei die gefrorenen Stränge in Schritt (b) starre Stäbe bilden, und **dadurch**, dass in Schritt (d) die Blöcke (183) mit einem im Wesentlichen konstanten Querschnitt durch Schneiden des oder jedes gefrorenen Strangs (251) gebildet werden, wobei die starren Stäbe transversal geschnitten werden.

2. Verfahren nach Anspruch 1, **dadurch gekennzeichnet, dass** in Schritt (b) das Püree in Form von mehreren kontinuierlichen Strängen (251) im Wesentlichen parallel zueinander auf die genannte Oberfläche (107) aufgebracht wird.

3. Verfahren nach Anspruch 1 oder 2, **dadurch gekennzeichnet, dass** in Schritt (a) der oder jeder Strang (251) durch die Passage durch ein in einem Abstand von der Oberfläche befindliches Mundstück (87) gebildet wird, wobei die maximale Querabmessung des oder jedes Strangs unterhalb des Mundstücks (87) durch den Druck geregelt wird, der oberhalb des Mundstücks (87) auf das Püree aufgebracht wird.

4. Verfahren nach einem der vorherigen Ansprüche, **dadurch gekennzeichnet, dass** die maximale Längsabmessung der Blöcke (183) beim Schneiden des oder jedes Strangs (251) geregelt wird.

5. Verfahren nach einem der vorherigen Ansprüche, **dadurch gekennzeichnet, dass** vor Schritt (a) das Lebensmittelpüree durch Kühlen oder durch Erhitzen wärmebehandelt wird.

6. Verfahren nach einem der vorherigen Ansprüche, **dadurch gekennzeichnet, dass** in Schritt (a) die Viskosität des Pürees zwischen 1000 mPa.s und 15.000 mPa.s liegt.

7. Verfahren nach einem der vorherigen Ansprüche, **dadurch gekennzeichnet, dass** in Schritt (b) der oder jeder auf die Fördereroberfläche (107) aufgebrachte Strang (251) durch einen Stickstoffgefriertunnel (21) geleitet wird.

8. Herstellung eines Lebensmittels, das mehrere Blöcke (183) aus gefrorenem Lebensmittelpüree umfasst, **dadurch gekennzeichnet, dass** jeder Block (183) zwei transversale Schnittflächen (184) aufweist, die im Wesentlichen eben sind und einen im Wesentlichen konstanten Querschnitt über die gesamte Länge zwischen den genannten Flächen (184) haben.

9. Herstellung eines Lebensmittels nach Anspruch 8,
**dadurch gekennzeichnet, dass** die Masse jedes Blocks (183) zwischen 0,2 g und 10 g, vorzugsweise zwischen 0,2 g und 5 g liegt.

10. Herstellung eines Lebensmittels nach Anspruch 8 oder 9, **dadurch gekennzeichnet, dass** die maximale Querabmessung der Blöcke (251) zwischen 3 mm und 10 mm liegt.

11. Herstellung eines Lebensmittels nach einem der Ansprüche 8 bis 10, **dadurch gekennzeichnet, dass** jeder Block zwischen den genannten transversalen Flächen (184) eine untere Fläche (185) aufweist, die im Wesentlichen eben ist, und eine gegenüberliegende Fläche (186), die nicht eben ist.

12. Herstellung eines Lebensmittels nach Anspruch 11,
**dadurch gekennzeichnet, dass** der Querschnitt der nicht ebenen Fläche (186) im Wesentlichen bogenförmig oder ellipsenförmig ist.

13. Anlage (11) zur Herstellung von Blöcken (183) aus gefrorenem Lebensmittelpüree, die Folgendes umfasst:
- einen Förderer (17), der eine Gefrierfläche (107) und Mittel (119) zum Kühlen der Gefrierfläche (107) aufweist;
- Mittel (15) zum Aufbringen von Lebensmittelpüree auf die genannte Oberfläche (107);
- Mittel (23) zum Schneiden des gefrorenen Lebensmittelpürees; und
- Mittel zur Formung von Blöcken aus gefrorenem Püree,
**dadurch gekennzeichnet, dass** die Aufbringungsmittel (15) wenigstens eine Auftragsdüse (69) für Püree auf die Oberfläche (107) umfassen, die ein kalibriertes Mundstück (87) begrenzt, um damit wenigstens einen kontinuierlichen Strang (251) mit einem im Wesentlichen konstanten Querschnitt zu bilden, und **dadurch**, dass die Mittel zur Formung von Blöcken durch die Schneidmittel (23) des oder jedes gefrorenen Strangs (251) gebildet werden.

14. Anlage (11) nach Anspruch 13, **dadurch gekennzeichnet, dass** die Aufbringungsmittel (15) mehrere Auftragsdüsen (69) für Püree auf die Oberfläche (107) umfassen, um darauf mehrere kontinuierliche Stränge (251) zu bilden, die im Wesentlichen parallel zueinander sind.

15. Anlage (11) nach Anspruch 13 oder 14, **dadurch gekennzeichnet, dass** die oder jede Düse (69) ein Formgebungsmundstück (87) für einen Strang (251) sowie Mittel zum Aufbringen eines regelbaren Drucks auf das Püree oberhalb des Mundstücks (87) umfasst.

16. Anlage (11) nach einem der Ansprüche 13 bis 15,
**dadurch gekennzeichnet, dass** sie Mittel (29) zum Wärmebehandeln des Lebensmittelpürees durch Kühlen oder Erhitzen umfasst, die oberhalb der Aufbringungsmittel (15) angeordnet sind.

17. Anlage (11) nach einem der Ansprüche 13 bis 16,
**dadurch gekennzeichnet, dass** die Kühlmittel einen Stickstoffgefriertunnel (21) umfassen, in dem die Fördereroberfläche (107) umläuft.

18. Anlage (11) nach Anspruch 17, **dadurch gekennzeichnet, dass** die Schneidmittel (23) ein Rotationsmesser (143) mit regelbarer Drehzahl umfassen, das am Ausgang des Tunnels (21) angeordnet ist.
